# EUROPEAN PATENT APPLICATION

(11) **EP 4 657 110 A1**
(43) Date of publication of application: **03.12.2025**
(21) Application number: 24178453.7
(22) Date of filing: 28.05.2024
(51) Int. Cl.: G01S 7/481, G01S 7/4912

(54) **A UNIT CELL, A SYSTEM, AND A METHOD FOR DETECTION OF LIGHT FROM A TARGET**

(71) Applicant: Imec VZW, 3001 Leuven (BE); Stichting IMEC Nederland, 5656 AE Eindhoven (NL)
(72) Inventor: SOUSSAN, Philippe, 1300 Wavre (BE); DAHLEM, Marcus, 3000 Leuven (BE); NIKOLOVA, Dessislava, 2150 Borsbeek (BE); OLDENBEUVING, Ruud, 5651 HE Eindhoven (NL)
(74) Representative: AWA Sweden AB

(57) **Abstract**

A unit cell (100; 200; 300) for detection of light from a target comprises: a light emitting unit (110; 210; 310) for emitting coherent light towards the target; an extractor (120; 220; 320) for extracting part of the emitted coherent light to form reference light; at least one photo-sensitive element (130, 132; 230a-h; 330, 332), each configured to receive light from the target based on emitted coherent light and to receive reference light for detecting both light from the target and reference light; wherein the unit cell (100; 200; 300) defines an optical path for reference light between the extractor (120; 220; 320) and the photo-sensitive element(s) (130, 132; 230a-h; 330, 332), wherein the reference light propagates through the optical path according to a free space propagation model; wherein the extractor (120; 220; 320) is, at least during a measurement, fixed in relation to the photo-sensitive element(s) (130, 132; 230a-h; 330, 332).

## Description

### Technical field

The present description relates to emission of light towards a target and detection of light received back from the target.

### Background

Transmission and reception of light signals may be used in various applications, such as in ranging for determining a distance to a target or in wireless data communication.

Part of the transmitted light may be used as reference light that may be combined with light received back from the target. This may be used for instance for determining frequency and/or phase difference between the reference light and the received light, which may further be used for determining information from the target.

The reference light needs to be very accurately controlled in order to enable correctly determining information from the target. Waveguide systems, such as provided by a photonic integrated circuit (PIC) may be used for guiding light for detecting of reference light. This may ensure that transmission of the reference light for detection may be accurately controlled. However, using waveguide systems imply that significant optical losses may be induced, for instance for in-coupling and/or out-coupling of light to and from waveguides. Also, light may need to be guided laterally such that a device for transmission and reception of light signals may require a large area.

### Summary

An objective of the present description is to enable accurate detection of light from a target relating light from the target to reference light. Another objective of the present description is to enable detection of light from a target using a compact arrangement.

These and other objectives are at least partly met by the invention as defined in the independent claims. Preferred embodiments are set out in the dependent claims.

According to a first aspect, there is provided a unit cell for detection of light from a target, said unit cell comprising: a light emitting unit configured to emit coherent light, wherein emitted coherent light is output into free space towards the target; an extractor for extracting part of the emitted coherent light to form reference light; at least one photo-sensitive element, each configured to receive the light from the target based on emitted coherent light and to receive reference light from the extractor, such that the photo-sensitive element is configured to simultaneously detect both the light from the target and the reference light; wherein the unit cell defines an optical path for reference light between the extractor and the at least one photo-sensitive element, wherein the reference light propagates through the optical path according to a free space propagation model; wherein the extractor is, at least during a measurement for detection of the light from the target, fixed in relation to the at least one photo-sensitive element.

The unit cell is configured to simultaneously detect both light from the target and reference light. This implies that the light from the target and the reference light are provided simultaneously in the photo-sensitive element such that a relation between the light from the target and the reference light may be detected directly in the photo-sensitive element as an interference of the light from the target with the reference light.

This facilitates detecting information from the target, since the information may be extracted from a signal detected by the photo-sensitive element.

Thanks to the reference light being propagated through the optical path according to a free space propagation model, the reference light need not be propagated in waveguides with associated optical losses. Hence, the unit cell may detect light from the target with a high efficiency in relation to a power needed for the emission of light towards the target.

The unit cell facilitates a compact arrangement at least of the light emitting unit and the at least one photo-sensitive element. The light emitting unit and the at least one photo-sensitive element may be integrated on a common substrate. This implies that the light emitting unit and the at least one photo-sensitive element may be arranged very close to each other.

The reference light may therefore be configured to propagate a short distance according to a free space propagation model, since the light emitting unit and the at least one photo-sensitive element may be arranged close to each other. This implies that there is an accurate control of the reference light, such that the relation between the detected light from the target and reference light may not be affected by external factors. For instance, the detection of light from the target in relation to reference light may not be affected by vibrations.

In addition, thanks to the unit cell enabling the light emitting unit and the at least one photo-sensitive element to be arranged close to each other, the light emitting unit and the at least one photo-sensitive element have an almost identical relation to the target. This implies that a parallax error may be avoided in the detection of light from the target based on the emitted coherent light.

The extractor may be integrated with the light emitting unit and the at least one photo-sensitive element. This implies that a fixed relation between the extractor and the at least one photo-sensitive element is provided. This ensures that the unit cell is not sensitive to any vibrations. For instance, the extractor may be integrated with the light emitting unit and the at least one photo-sensitive element in a compact arrangement, such as being monolithically integrated on a common substrate.

The extractor may, however, be a separate part from the light emitting unit and the at least one photo-sensitive element. This may allow adjustment of the extractor between measurements. The extractor may still be configured to have a fixed relation to the at least one photo-sensitive element during a measurement.

As used herein, the term unit cell refers to components that may be used for locally detecting light from the target. The unit cell may thus be part of an array such that a plurality of unit cells may be repeated in the array. This may enable determining information from the target in two dimensions. However, it should be understood that the unit cell may be used in isolation such that information from the target may be determined in a single point using a single unit cell.

The components of the unit cell may have a well-defined relation to each other. The components may for instance be integrated. However, the components may alternatively be separate but still providing a well-defined relation between the components. The unit cell may thus be compact. This also facilitates having a small pitch between neighboring unit cells in an array.

The detection of light from the target may relate to detection of emitted coherent light being reflected by the target. In other words, the light from the target being based on emitted coherent light may imply that the light from the target is provided by the emitted coherent light being reflected by the target. This may be used for instance in ranging for determining a distance between the unit cell and the target.

The detection of light from the target may alternatively relate to detection of coherent light from the target, which is synchronized with the emitted coherent light by the unit cell. Thus, the light from the target being based on emitted coherent light may imply that light is output from the target, wherein the light from the target is synchronized with the emitted coherent light by the unit cell. This may be used in data communication between the unit cell and the target.

As used herein, the term "light from the target" may alternatively be referred to as "target light". Thus, the terms "light from the target" and "target light" are used interchangeably herein.

The unit cell comprises a light emitting unit that is configured to emit light towards the target. The light emitting unit may be configured to generate the coherent light. Thus, the light emitting unit may be a laser source, which may be directed to output generated coherent light into free space towards the target. However, the light emitting unit need not necessarily include a light source for generating the coherent light. Rather, the light source may be external to the unit cell. The light generated by the light source may then be guided to the light emitting unit for output towards the target. For instance, the generated light may be guided in waveguide(s) to the light emitting unit and the light emitting unit may comprise a grating for directing light out of the waveguide to be output towards the target.

The extractor is configured to extract part of the emitted coherent light. The extractor may be arranged such that only part of the emitted coherent light is incident on the extractor. The extractor may further extract all or a portion of the light incident on the extractor for forming the reference light. The extractor may be configured to receive all of the emitted coherent light and may thus extract a portion of the light incident on the extractor to form reference light and may pass a portion of the light incident on the extractor for being directed to the target.

It should be realized that the part of the emitted coherent light which is extracted to form the reference light may be a small part of the emitted coherent light. Thus, a minor portion of the emitted coherent light, such as less than 1 %, may be extracted from the emitted coherent light to form the reference light.

It should be realized that each photo-sensitive element receives both the light from the target and the reference light. Thus, the light from the target and the reference light are simultaneously received in the same photo-sensitive element and therefore simultaneously detected by the photo-sensitive element. This implies that the relation between light from the target and reference light is detected directly in the photo-sensitive element.

The photo-sensitive element may thus detect an interference between the target light and the reference light. For instance, the photo-sensitive element may be configured to detect an envelope of the interference between the target light and the reference light. This may be advantageously used for determining information from the target.

The reference light propagates through the optical path between the extractor and the at least one photo-sensitive element according to a free space propagation model. This implies that the reference light is not guided and propagation of the reference light between the extractor and the at least one photo-sensitive element is for instance not limited by side walls extending along the optical path. The propagation may occur through air or vacuum. However, the propagation may occur through another medium, such as even through a solid material, such as glass. In case of a solid material, a cross-section of the material perpendicular to a direction of propagation of the reference light may be so large that the propagation occurs as a free space propagation model.

According to an embodiment, each of the at least one photo-sensitive element is configured to receive the light from the target and the reference light at a common surface of the photo-sensitive element.

This implies that the unit cell may be configured to receive the target light and to extract the reference light such that target light and reference light are propagating in a common direction. For instance, the target light and the reference light may propagate along a common optical axis to each of the at least one photo-sensitive element.

The target light and the reference light may thus propagate along a common path between the extractor and the at least one photo-sensitive element. This may ensure that requirements on a relation between the extractor and the at least one photo-sensitive element are more lenient compared to a set-up where target light and reference light are separately propagated to the at least one photo-sensitive element.

According to an embodiment, the extractor is configured to reflect part of the emitted coherent light to form the reference light, wherein the reference light is directed towards the common surface of the photo-sensitive element.

This is a suitable manner for ensuring that target light and reference light may propagate along a common direction to the at least one photo-sensitive element.

The extractor may in this case include a (partially) reflective element for redirecting a part of the emitted coherent light into an opposite direction which will coincide with the direction of target light. A partially reflective element may be used for reflecting part of the emitted coherent light for forming the reference light while also passing part of the emitted coherent light to be propagated to the target. However, according to an alternative, the extractor may be arranged to interact with a portion of the emitted coherent light, such as forming a reflective surface around an opening. This implies that part of the emitted coherent light may be reflected by the extractor whereas another part of the emitted coherent light will not be incident on the extractor and will thus pass unaffected.

According to an embodiment, each of the at least one photo-sensitive element is configured to receive the light from the target at a first surface of the photo-sensitive element and receive the reference light at a second surface of the photo-sensitive element opposite to the first surface.

Thus, the reference light and the target light may be incident on each of the at least one photo-sensitive element from opposing directions. This may be utilized with photo-sensitive elements that are able to receive and detect light from opposing directions.

According to an embodiment, the extractor is configured to direct the extracted part of the emitted coherent light towards the at least one photo-sensitive element and is further configured to collimate the emitted coherent light for forming a collimated light beam towards the target.

Thus, the extractor may, in addition to being able to extract reference light, also be configured to ensure that light is properly directed towards the target.

For instance, the light emitting unit may be configured to emit coherent light in a relatively angular range. The extractor may have different regions used for collimating light towards the target and for forming reference light, respectively. The extractor may have a central region which is configured to receive light emitted centrally around an optical axis. The central region may be configured to form the collimated light beam. In addition, the extractor may have peripheral region(s) configured to receive light emitted at large angles in relation to the optical axis. The peripheral region(s) may thus be used for extracting light to form the reference light.

The extractor may be a passive optical component. According to an embodiment, the extractor comprises one or more of: a partly transparent, partly reflecting mirror or lens, or a metasurface.

These may be suitable manners of achieving the extractor. It should be realized that the extractor may be achieved in many different ways.

According to an embodiment, the light emitting unit comprises a vertical emitter arranged on a substrate and configured to emit coherent light along a normal to the substrate.

The at least one photo-sensitive element may further comprise a photo-sensitive area which may extend along a surface of the substrate or parallel to the surface. This implies that the light emitting unit may emit light along a normal to the surface on which light is incident. This facilitates controlling reference light and target light such that the target light and the reference light are simultaneously detected by the at least one photo-sensitive element.

The vertical emitter may comprise a vertical waveguide emitter. Light may thus be guided in a waveguide along an extension of the substrate and may be redirected by the vertical waveguide emitter for output of light along the normal of the substrate.

The vertical waveguide emitter may for instance be implemented as a grating coupler, an etched mirror, or a photonic crystal for redirecting light propagating in the waveguide.

According to an embodiment, the light emitting unit further comprises a vertical emitter which is configured to generate coherent light and to emit light along the normal of the substrate.

This implies that the light emitted by the light emitting unit may be generated within the unit cell and may be directly emitted towards the target. No optical waveguides may be needed for guiding of generated light to the unit cell. This implies that the unit cell may be very compact.

Further, the unit cell may provide local components for generating and emitting light as well as for detecting light. This implies that a plurality of unit cells may be densely arranged in an array, without being constrained by optical waveguides.

In addition, light may be emitted towards the target using a high power conversion efficiency, in that electrical power required for generating and emitting the light is to a large degree converted to optical power of the emitted light. As an example, the unit cell may need less than 50 mW of electrical power for output of 10 mW of optical power.

The vertical emitter may for instance be provided as a vertical-cavity surface emitting laser (VCSEL), a vertical-external-cavity surface-emitting laser (VECSEL), a photonic-crystal surface-emitting laser (PCSEL), or a horizontal cavity surface-emitting laser (HCSEL).

According to an embodiment, the at least one photo-sensitive element is arranged in a common plane with the vertical emitter.

This is suitable for providing a very compact unit cell. The at least one photo-sensitive element may thus be manufactured in the common plane, such that the unit cell may be formed in a monolithically integrated device. This may further facilitate manufacturing of the unit cell in large volumes.

The at least one photo-sensitive element may for instance be arranged at a distance smaller than 200 um from the vertical emitter. This may ensure that parallax errors are avoided in measurement for detection of the light from the target.

According to an embodiment, the unit cell comprises a pair of photo-sensitive elements, wherein each photo-sensitive element in the pair is configured to receive the light from the target and reference light, such that the light from the target is simultaneously detected with the reference light in the photo-sensitive element, wherein output from the photo-sensitive elements in the pair is connected for providing balanced photodetection.

The unit cell provides a compact arrangement of components of the unit cell. This may allow multiple photo-sensitive elements to be provided within a single unit cell. Still, the unit cell may be compact and may be suitable for use in an array with densely packed unit cells.

Having a pair of photo-sensitive elements enables use of balanced photodetection. This may be used for removing incoherent noise from the photo-sensitive elements.

However, it should be realized that the unit cell may in other embodiments only comprise a single photo-sensitive element for detecting target light and reference light.

According to an embodiment, the unit cell comprises a plurality of photo-sensitive elements, wherein the photo-sensitive elements are configured to detect different characteristics of light from the target.

The use of a plurality of photo-sensitive elements may also be used for detecting different characteristics of target light. The different characteristics of target light may for instance relate to different polarizations and/or different angles of incidence of the target light.

This may be useful for detecting detailed information from the target.

According to an embodiment, different photo-sensitive elements are arranged on opposite sides of the light emitting unit.

For instance, the photo-sensitive elements may be arranged centered around the light emitting unit. This is a suitable arrangement for allowing combined detection of information from the target by a plurality of photo-sensitive elements. Further, the unit cell may be compact and arranged in a small area.

According to an embodiment, the light emitting unit is configured to emit a frequency modulated continuous wave (FMCW) signal and the at least one photo-sensitive element is configured to simultaneously detect the light from the target and the reference light to form a combined signal, wherein a beat frequency based on a frequency difference of the light from the target and the reference light represents a distance to the target.

Thus, the emitted coherent light from the light emitting unit may be the FMCW signal. The unit cell is particularly suited for ranging measurements that determine a distance between the unit cell and the target. The determining of the distance may be suitably performed based on a FMCW signal.

According to a second aspect, there is provided a system for detection of light from a target, said system comprising: an array of unit cells according to the first aspect, wherein the light emitting unit and the at least one photo-sensitive element of a first unit cell of the array are arranged in a separate coherent area of the array from the light emitting unit and the at least one photo-sensitive element of neighboring unit cells of the array.

Effects and features of the second aspect are largely analogous to those described above in connection with the first aspect. Embodiments mentioned in relation to the second aspect are largely compatible with the first aspect.

This implies that information from the target may be sensed in a one-dimensional or two-dimensional array. Hence, more accurate information of the target may be determined and/or a data rate for sensing information from the target may be increased.

Thanks to the compact arrangement of the unit cells of the first aspect, the unit cells are particularly suited for being used in an array for detecting information from the target.

The light emitting unit and the at least one photo-sensitive element of each unit cell may be arranged in a respective area. Thus, within a separate coherent area of one unit cell, there are no components of other neighboring unit cells. The separate coherent areas may thus be arranged side-by-side in the array. In particular, the coherent areas may be provided in a regular arrangement in the array.

The light emitting unit and the at least one photo-sensitive element of a unit cell may be arranged in close vicinity to each other. This implies that the unit cells may be densely arranged in the array.

According to an embodiment, a pitch of the unit cells in the array is smaller than 500 µm, such as smaller than 100 µm.

Thus, the unit cells may be very densely arranged in the array allowing for detecting accurate information from the target using a small area.

According to a third aspect, there is provided a method for detection of light from a target, said method comprising: emitting coherent light that is output into free space towards the target; extracting, by an extractor, part of the emitted coherent light to form reference light; propagating reference light along an optical path between the extractor and at least one photo-sensitive element, wherein the reference light propagates through the optical path according to a free space propagation model and wherein the extractor is at least during a measurement, fixed in relation to the at least one photo-sensitive element; and receiving, by the at least one photo-sensitive element, light from the target based on emitted coherent light, and reference light, such that the light from the target is simultaneously detected with the reference light in the photo-sensitive element.

Effects and features of the third aspect are largely analogous to those described above in connection with the first aspect. Embodiments mentioned in relation to the third aspect are largely compatible with the first and second aspects.

The method simultaneously detects both target light and reference light. This implies that the target light and the reference light are simultaneously detected in the photo-sensitive element such that a relation between the target light and the reference light may be detected directly in the photo-sensitive element as an interference of the target light with the reference light.

Thanks to the reference light being propagated through the optical path according to a free space propagation model, the reference light need not be propagated in waveguides with associated optical losses. Hence, the method may detect light from a target with a high efficiency in relation to a power needed for the emission of light towards the target.

The method may be performed by a unit cell comprising a light emitting unit for emitting the coherent light, the extractor, and the at least one photo-sensitive element, wherein the light emitting unit and the at least one photo-sensitive element may be integrated on a common substrate. The method may be performed in a compact arrangement.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1 is a schematic cross-sectional view of a unit cell for detection of light from a target according to a first embodiment.
Fig. 2 is a schematic perspective view of a unit cell according to a second embodiment.
Fig. 3 is a schematic cross-sectional view of a unit cell according to a third embodiment.
Fig. 4 is a schematic view of a system according to an embodiment.
Fig. 5 is a flow chart of a method according to an embodiment.

### Detailed description

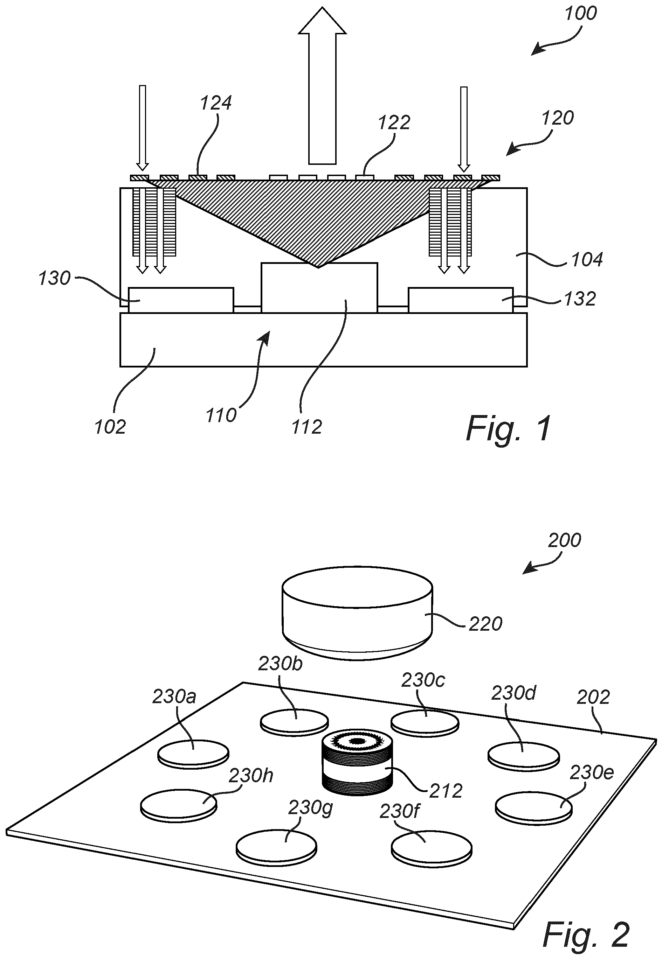

Referring now to Fig. 1, a unit cell 100 according to a first embodiment for detection of light from a target 10 will be described.

The unit cell 100 provides a compact arrangement of components of the unit cell 100. The unit cell 100 may include all components needed for emitting light towards the target 10 and detecting light received back from the target 10.

As shown in Fig. 1, the unit cell 100 may be formed as an integrated device, wherein the components of the unit cell 100 are integrated on a common substrate 102. The substrate 102 may for instance be a semiconductor substrate, such as formed by silicon.

Electronic circuitry may also be integrated on or in the substrate 102. The electronic circuitry may be configured to provide control signals for controlling the unit cell 100 and for reading out information from the unit cell 100.

Thus, the unit cell 100 may be provided in a compact arrangement which may be conveniently combined with control circuitry and/or read-out circuitry.

The unit cell 100 comprises a light emitting unit 110 configured to emit coherent light. The light emitting unit 110 may comprise a vertical emitter 112, which is arranged on the substrate 102. The vertical emitter 112 may be configured to emit coherent light along a normal to the substrate 102.

The vertical emitter 112 may for instance be provided as a vertical-cavity surface emitting laser (VCSEL), a vertical-external-cavity surface-emitting laser (VECSEL), a photonic-crystal surface-emitting laser (PCSEL), or a horizontal cavity surface-emitting laser (HCSEL).

The vertical emitter 112 may be formed as a stack of layers arranged on the substrate 102. The stack of layers may define a vertical emitter 112 that generate laser light and outputs laser light through a top layer facing away from the substrate 102.

Multiple vertical emitters may be manufactured simultaneously and/or in parallel on the substrate 102. Thus, an array of unit cells 100 may be quickly manufactured.

However, it should be realized that the vertical emitter 112 may alternatively be provided as a vertical waveguide emitter. In such case, the unit cell 100 may comprise a waveguide for guiding coherent light along an extension of the surface of the substrate. The vertical waveguide emitter may for instance be implemented as a grating coupler, an etched mirror, or a photonic crystal for redirecting light propagating in the waveguide to be output along the normal of the substrate 102.

The unit cell 100 further comprises an extractor 120 for extracting part of the emitted coherent light to form reference light. The extractor 120 is arranged to receive at least part of the emitted coherent light from the light emitting unit 110. Thus, the extractor 120 is arranged in an optical path of the emitted coherent light.

As shown in Fig. 1, the vertical emitter 112 may be covered by a material layer 104, which may be arranged at least above a surface of the vertical emitter 112 through which the coherent light is emitted. The material layer 104 may for instance provide protection of the vertical emitter 112.

The emitted coherent light is thus initially output into a solid material propagating towards a surface of the material layer 104, which may be parallel to the surface of the substrate 102. The extractor 120 may be arranged on the surface of the material layer 104 such that the emitted coherent light beam passes the extractor 120 before being output into air or another medium external to and surrounding the unit cell 100.

The extractor 120 may be formed by one or more layers applied to the surface of the material layer 104. The extractor 120 may for instance be formed by a partly transparent reflective element, such as a mirror or lens. The extractor 120 may be formed by one or more planar layers and/or may comprise a curved surface. The extractor 120 may comprise a coating, which may provide a desired effect on the emitted light, such as for reflecting the emitted light.

The extractor 120 may comprise a metasurface or metamaterial comprising features smaller than a wavelength of the emitted coherent light. The metasurface or metamaterial may be accurately designed for providing a desired effect on the emitted coherent light.

The extractor 120 may be a passive optical component for interacting with the emitted coherent light.

The extractor 120 may comprise two or more regions, such that different regions provide different effects on the emitted coherent light. As shown in Fig. 1, the extractor 120 may comprise a first region 122 around an optical axis of the emitted coherent light. The first region 122 is configured to collimate the emitted coherent light for forming a collimated light beam towards the target 10. The forming of the collimated light beam may ensure that a high intensity of the emitted light is received by the target 10. The first region 122 may be configured to pass all of the light incident on the first region 122 and not to extract any light for forming the reference light.

The extractor 120 may further comprise a second region 124 which may be offset from the optical axis of the emitted coherent light or may surround the first region. The second region 124 may be configured to reflect light for forming the reference light. Thus, the reference light may be reflected back into the material layer 104.

The first region may be configured to pass all of the emitted coherent light. Instead of the first region, the extractor 120 may comprise a hole, or the extractor 120 may be arranged offset from the optical axis so as not to interact with emitted light propagating at small angles around the optical axis.

The emitted coherent light output by the unit cell 100 may be received by the target 10 causing the target 10 to send back light to the unit cell 100. The target 10 may reflect the emitted coherent light for forming target light directed back towards the unit cell 100.

The unit cell 100 further comprises at least one photo-sensitive element 130, 132. As shown in Fig. 1, the unit cell 100 could comprise a first photo-sensitive element 130 and a second photo-sensitive element 132.

The first and second photo-sensitive elements 130, 132 are configured to receive reference light from the extractor 120. The reference light propagates according to a free space propagation model from the extractor 120 to the photo-sensitive elements 130, 132. The reference light may be reflected back by the extractor 130 into the material layer 104 to propagate through the material layer 104 to first and second photo-sensitive elements 130, 132. The material layer 104 may have a large extension along a direction of the surface of the substrate 102, such as extending over a plurality of unit cells 100. The reference light may thus not be confined by side walls or structures in the material layer 104 such that the reference light propagates according to a free space propagation model.

The first and second photo-sensitive elements 130, 132 are further configured to receive target light. The target light may be incident on the material layer 104 and/or the extractor 120 and may be passed therethrough for reaching the first and second photo-sensitive elements 130, 132. The target light and the reference light may thus propagate along a common direction between the extractor 120 and the photo-sensitive elements 130, 132.

Thus, both the target light and the reference light are simultaneously received and detected by each of the first and second photo-sensitive elements 130, 132. The target light and the reference light may thus be received on a common surface of each of the photo-sensitive elements 130, 132.

The first and second photo-sensitive elements 130, 132 may each comprise, for instance, a photodiode which may be formed in or on the substrate 102. The photodiode may be configured to provide an electrical signal that is dependent on intensity of incident light. The photodiode may further be connected to circuitry for reading of the electrical signal from the photodiode.

The first and second photo-sensitive elements 130, 132 may be configured to detect interference of target light with reference light due to both the target light and the reference light being received in the photo-sensitive elements 130, 132. The first and second photo-sensitive elements 130, 132 may for instance detect information indicative of a phase shift or a frequency difference of the target light and the reference light. This may be used for extracting information from the target 10.

The first and second photo-sensitive elements 130, 132 may be formed in or on the surface of the substrate 102. For instance, the photo-sensitive elements 130, 132 may be formed as photodiodes based on regions of different doping in the semiconductor substrate 102. However, the first and second photo-sensitive elements 130, 132 may alternatively be formed based on one or more layers arranged on the substrate 102, comprising an active layer for absorbing light and converting incident light to an electrical signal.

The first and second photo-sensitive elements 130, 132 may be arranged in a common plane with the vertical emitter 112. This implies that the first and second photo-sensitive elements 130, 132 may be manufactured in parallel with the vertical emitter 112. This also facilitates having a compact arrangement of the unit cell 100 such that a footprint of the unit cell 100 on the surface of the substrate 102 may be small.

In Fig. 1, the extractor 120 is integrated with the photo-sensitive elements 130, 132. This implies that the extractor 120 has a fixed relation to the photo-sensitive elements 130, 132. This may ensure that detection of light from the target 10 using the reference light is not sensitive to any vibrations.

The unit cell 100 provides the light emitting unit 110, the extractor 120 and the at least one photo-sensitive element 130 in a very compact manner. The light emitting unit 110, the extractor 120 and the at least one photo-sensitive element 130 are integrated in the embodiment of Fig. 1. This facilitates miniaturizing of the unit cell 100 such that the unit cell 100 may be very small. An area of the unit cell 100 on the substrate 102 may be smaller than 500 µm, such as smaller than 100 µm. The unit cell 100 may be manufactured using semiconductor processing technology, facilitating manufacturing of a compact unit cell 100.

Thus, the unit cell 100 may be small and may be manufactured such that features on several different areas of the substrate 102 may be formed simultaneously. This facilitates forming of a plurality of photo-sensitive elements 130, 132 within the same unit cell 100. Hence, while the unit cell 100 may use only a single photo-sensitive element in order to detect information from a target, there is also a possibility to include more than one photo-sensitive element 130, 132 within a single unit cell 100, while the unit cell 100 may still be small and without making manufacturing of the unit cell 100 more complex.

Fig. 1 shows a cross-section of the unit cell 100. Thus, the first and second photo-sensitive elements 130, 132 arranged in the illustrated cross-section are shown in Fig. 1. It should be realized that the unit cell 100 may comprise additional photo-sensitive elements with other relations to the vertical emitter 112. The photo-sensitive elements 130 may be arranged around the vertical emitter 112, such that the vertical emitter 112 is centrally arranged in relation to the photo-sensitive elements 130. As shown in Fig. 1, the first and second photo-sensitive elements 130, 132 may thus be arranged on opposite sides of the vertical emitter 112.

A plurality of photo-sensitive elements 130, 132 may be used for providing the unit cell 100 with additional functionality. According to an embodiment, the first photo-sensitive element 130 and the second photo-sensitive element 132 form a pair of photo-sensitive elements 130, 132, each configured to receive both the target light and the reference light. The output from the first and second photo-sensitive elements 130, 132 may then be connected for providing balanced photodetection by the unit cell 100.

According to another embodiment, a plurality of photo-sensitive elements 130, 132 may be configured to detect different characteristics of the target light. Thus, the first photo-sensitive element 130 may be configured to detect a first characteristic of the target light and the second photo-sensitive element 132 may be configured to detect a second characteristic of the target light.

The first and second characteristics may for instance be different polarizations of light, different angles of incidence of target light.

Referring now to Fig. 2, a unit cell 200 according to a second embodiment will be described. The unit cell 200 shares many features with the unit cell 100 of the first embodiment. For brevity and to avoid repetition, the below discussion of the unit cell 200 of the second embodiment will focus on the differences to the first embodiment.

The unit cell 200 comprises a light emitting unit 210 and a plurality of photo-sensitive elements 230a-h. The light emitting unit 210 may comprise a vertical emitter 212. The vertical emitter 212 and the photo-sensitive elements 230a-h are integrated on a common substrate 202 and may be arranged in a common plane.

The vertical emitter 212 and the photo-sensitive elements 230a-h may be arranged at or close to a top surface of an integrated device. The unit cell 100 may further comprise an extractor 220, which is arranged above the vertical emitter 212 and the photo-sensitive elements 230a-h.

The extractor 212 is configured to extract part of emitted coherent light from the vertical emitter 212 to form reference light, which is directed towards the photo-sensitive elements 230a-h. The extractor 212 may further be configured to pass emitted coherent light towards the target and to pass target light received back from the target towards the photo-sensitive elements 230a-h.

The extractor 220 may be arranged in a well-defined relation to the vertical emitter 212 and the photo-sensitive elements 230a-h. The extractor 220 may be mounted so as to provide the well-defined relation to the vertical emitter 212 and the photo-sensitive elements 230a-h. However, the extractor 220 need not necessarily be physically connected to the substrate 202.

The extractor 220 is arranged such that, at least during a measurement, there is a fixed relation between the extractor 220 and the photo-sensitive elements 230a-h. This implies that the unit cell 200 is not sensitive to noise due to external factors, such as vibrations. Also, the unit cell 200 is configured such that reference light and target light propagate along a common direction between the extractor 220 and the photo-sensitive elements 230a-h. This may also ensure that the unit cell 200 is not sensitive to external factors.

A location of the extractor 220 may possibly be adjustable in a controlled manner. This may allow the extractor 220 to be moved in relation to the vertical emitter 212 and the photo-sensitive elements 230a-h. This could be used for changing settings between different measurements, while still having a well-defined relation between the extractor 220 and the photo-sensitive elements 230a-h during a single measurement. Thus, during a measurement, there is a fixed relation between the extractor 220 and the photo-sensitive elements 230a-h.

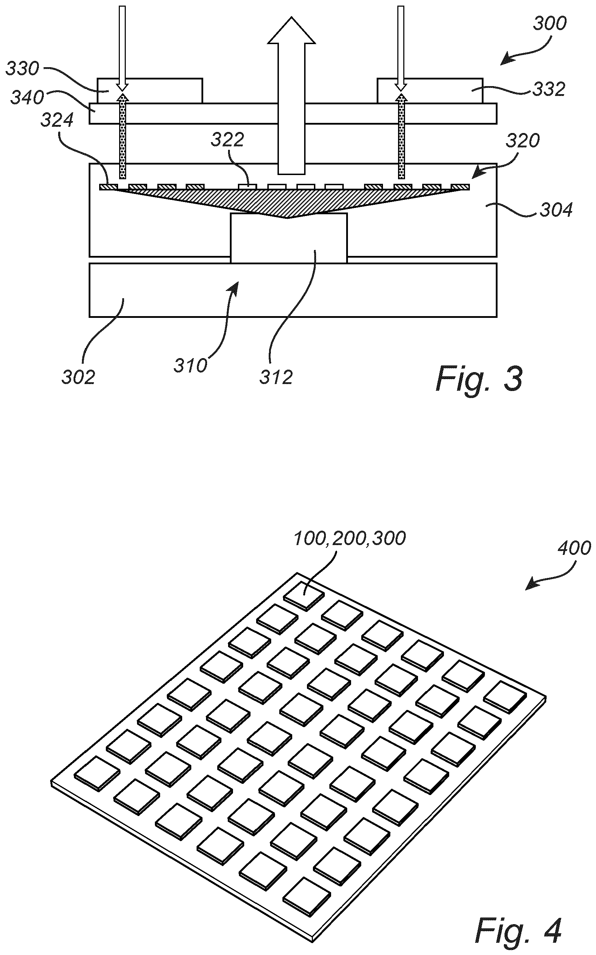

Referring now to Fig. 3, a unit cell 300 according to a third embodiment will be described. The unit cell 300 shares many features with the unit cell 100 of the first embodiment. For brevity and to avoid repetition, the below discussion of the unit cell 300 of the third embodiment will focus on the differences to the first embodiment.

The unit cell 300 comprises a light emitting unit 310 and a first photo-sensitive element 330 and a second photo-sensitive element 332. The light emitting unit 210 may comprise a vertical emitter 312.

Similar to the embodiment in Fig. 1, the vertical emitter 312 may be covered by a material layer 304, which may be arranged at least above a surface of the vertical emitter 312 through which the coherent light is emitted.

The emitted coherent light is thus initially output into a solid material propagating towards a surface of the material layer 304, which may be parallel to the surface of a substrate 302 on which the vertical emitter 312 is arranged. The extractor 320 may be arranged in the material layer 304 or on the surface of the material layer 304. The extractor 320 may thus be integrated with the vertical emitter 312. The extractor 320 may be configured such that the emitted coherent light beam passes the extractor 320 before being output into air or another medium external to the integrated device.

The extractor 320 may comprise a first region 322 for forming a collimated light beam towards the target 10 and a second region 324 for directing extracted light forming reference light from the extractor 320 towards the first and second photo-sensitive elements 330, 332.

The extractor 320 is configured to transmit the emitted coherent light from the vertical emitter 312 to the first and second photo-sensitive elements 330, 332.

The first and second photo-sensitive elements 330, 332 may be formed on a separate substrate 340 from the substrate 302 on which the vertical emitter 312 and the extractor 320 are arranged. The separate substrate 340 may be mounted in relation to the substrate 302 for providing a fixed relation, at least during a measurement, between the extractor 320 and the photo-sensitive elements 330, 332.

The separate substrate 340 is transparent to the emitted light such that light may be passed through the separate substrate 340 towards the target and such that the reference light may pass through the separate substrate 340 to be detected by the photo-sensitive elements 330, 332.

The separate substrate 340 may further be provided with read-out circuitry for read-out of signals from the photo-sensitive elements 330, 332.

It should be realized that the photo-sensitive elements 330, 332 may alternatively be arranged in a layer integrated on the common substrate 302 on which the vertical emitter 312 and the extractor 320 are also arranged. The photo-sensitive elements 330, 332 may thus be arranged in a layer above the extractor 320 such that the extractor 320 is arranged between the vertical emitter 312 and the photo-sensitive elements 330, 332.

In the configuration of the unit cell 300, the photo-sensitive elements 330, 332 may receive target light from a first direction and reference light from a second direction. The target light and the reference light may be propagating in opposite directions towards the photo-sensitive elements 330, 332.

The photo-sensitive elements 330, 332 may thus be configured to receive the target light at a first surface of the photo-sensitive element 330; 332 and receive the reference light at a second surface of the photo-sensitive element 330; 332 opposite to the first surface.

The unit cell 100, 200, 300 according to any of the embodiments described above is suitable for use in applications wherein light from a target needs to be related to a reference representing light emitted to the target. The unit cell 100, 200, 300 provides the relation by simultaneously detecting both target light and reference light. The unit cell 100, 200, 300 is set-up to provide an accurate relation between the target light and the reference light. This may be used for instance for determining a phase difference between the target light and the reference light or a frequency difference between the target light and the reference light.

The unit cell 100, 200, 300 may for instance be used for ranging, wherein a distance to the target 10 is determined. This may be performed using a frequency modulated continuous wave (FMCW) signal. Hence, the light emitting unit 110, 210, 310 may be configured to emit coherent light providing a FMCW signal. The FMCW signal may comprise frequency chirps, wherein the frequency is changed over time.

The simultaneous detection of the target light and the reference light forms a combined signal which is detected by the photo-sensitive elements. The combined signal will then comprise a beat frequency based on a frequency difference of the target light and the reference light. The frequency difference is dependent on an offset in time at which the target light arrives at the photo-sensitive elements in relation to the reference light and thereby represents a distance to the target.

The beat frequency may be extracted from the combined signal detected by the photo-sensitive elements for determination of the distance to the target.

Referring now to Fig. 4, a system 400 will be described. The system 400 comprises a plurality of unit cells, which may be formed according to any of the embodiments described above.

The plurality of unit cells 100, 200, 300 may be arranged in an array, such as a one-dimensional or a two-dimensional array. Each of the unit cells 100, 200, 300 may be arranged in a separate area of the array, such that the light emitting unit and the at least one photo-sensitive element of a first unit cell of the array are arranged in close vicinity to each other and in a separate coherent area of the array from the light emitting unit and the at least one photo-sensitive element of neighboring unit cells of the array.

It should be realized that the unit cells 100, 200, 300 may share common features. Components of the unit cells 100, 200, 300 may all be arranged on the same common substrate, which may extend across the entire array. Also, components may be embedded in or covered by a common material layer which may extend across the entire array. Further, read-out circuitry and/or control circuitry may be provided on the common substrate and may be shared by the unit cells 100, 200, 300.

The array of unit cells 100, 200, 300 may be used for determining information from a target in one or two dimensions. The array may allow spectral and/or spatial resolution of detection of light from the target. Hence, using an array more information may be determined from a target and a rate of determining information from the target may be increased.

Time division may be used for enabling distinguishing of detection by different unit cells 100, 200, 300 in the array. However, it should be realized that detection by different unit cells 100, 200, 300 may be distinguished in other ways. For instance, different unit cells 100, 200, 300 may emit light of different wavelengths (frequency) providing frequency division. Also, a combination of time division and frequency division may be used.

As discussed above, the unit cells 100, 200, 300 may be arranged in a small area. This allows the unit cells 100, 200, 300 to be densely packed in the array. For instance, a pitch of the unit cells 100, 200, 300 in the array is smaller than 500 µm, such as smaller than 100 µm.

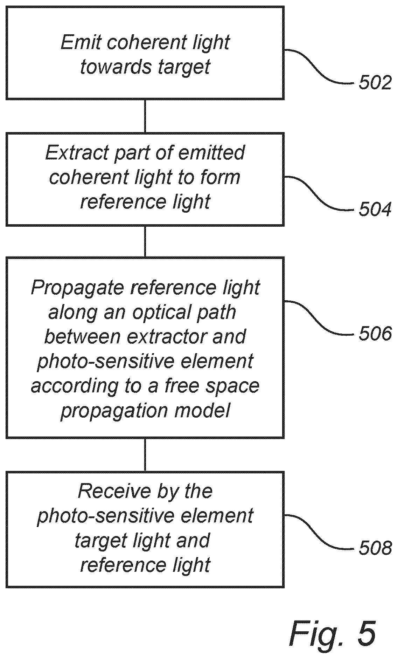

Referring now to Fig. 5, a method for detection of light from a target will be described. The method may be performed by the unit cell according to any of the embodiments described above.

The method comprises emitting 502 coherent light that is output into free space towards the target. The coherent light may be emitted by a light emitting unit of the unit cell. The coherent light may be emitted to propagate with an optical axis extending along a normal of a surface of a substrate on which the light emitting unit is arranged.

The method further comprises extracting 504, by an extractor, part of the emitted coherent light to form reference light. The extractor may also form part of the unit cell.

The method further comprises propagating 506 reference light along an optical path between the extractor and at least one photo-sensitive element. The at least one photo-sensitive element may also form part of the unit cell.

The reference light is propagated through the optical path according to a free space propagation model. This implies that optical losses related to guiding light in a waveguide, such as for in-coupling or out-coupling of light, may be avoided. Further, the extractor is at least during a measurement, fixed in relation to the at least one photo-sensitive element. This may ensure that the reference light may be provided with high accuracy in the photo-sensitive element.

The method further comprises receiving 508, by the at least one photo-sensitive element, target light based on emitted coherent light, and reference light, such that the target light is simultaneously detected with the reference light in the photo-sensitive element.

Hence, the photo-sensitive element may detect information from the target by simultaneously detecting target light and the reference light.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A unit cell (100; 200) for detection of light from a target, said unit cell (100; 200; 300) comprising:
a light emitting unit (110; 210; 310) configured to emit coherent light, wherein emitted coherent light is output into free space towards the target;
an extractor (120; 220) for extracting part of the emitted coherent light to form reference light;
at least one photo-sensitive element (130, 132; 230a-h; 330, 332), each configured to receive the light from the target based on emitted coherent light and to receive reference light from the extractor, such that the photo-sensitive element is configured to simultaneously detect both the light from the target and the reference light;
wherein the unit cell (100; 200; 300) defines an optical path for reference light between the extractor (120; 220; 320) and the at least one photo-sensitive element (130, 132; 230a-h; 330, 332), wherein the reference light propagates through the optical path according to a free space propagation model;
wherein the extractor (120; 220; 320) is, at least during a measurement for detection of the light from the target, fixed in relation to the at least one photo-sensitive element (130, 132; 230a-h; 330, 332).

2. The unit cell according to claim 1, wherein each of the at least one photo-sensitive element (130, 132; 230a-h) is configured to receive the light from the target and the reference light at a common surface of the photo-sensitive element (130, 132; 230a-h).

3. The unit cell according to claim 2, wherein the extractor (120; 220) is configured to reflect part of the emitted coherent light to form the reference light, wherein the reference light is directed towards the common surface of the photo-sensitive element (130; 132; 230a-h).

4. The unit cell according to claim 1, wherein each of the at least one photo-sensitive element (330; 332) is configured to receive the light from the target at a first surface of the photo-sensitive element (330; 332) and receive the reference light at a second surface of the photo-sensitive element (330; 332) opposite to the first surface.

5. The unit cell according to any one of the preceding claims, wherein the extractor (120; 220; 320) is configured to direct the extracted part of the emitted coherent light towards the at least one photo-sensitive element (130, 132; 230a-h; 330, 332) and is further configured to collimate the emitted coherent light for forming a collimated light beam towards the target.

6. The unit cell according to any one of the preceding claims, wherein the extractor (120; 220; 320) comprises one or more of: a partly transparent, partly reflecting mirror or lens, or a metasurface.

7. The unit cell according to any one of the preceding claims, wherein the light emitting unit (110; 210; 310) comprises a vertical emitter (112; 212; 312) arranged on a substrate (102; 202; 302) and configured to emit coherent light along a normal to the substrate (102; 202; 302).

8. The unit cell according to claim 7, wherein the at least one photo-sensitive element (130, 132; 230a-h) is arranged in a common plane with the vertical emitter (112; 212).

9. The unit cell according to any one of the preceding claims, wherein the unit cell (100; 200; 300) comprises a pair of photo-sensitive elements (130, 132; 230a-h, 330, 332), wherein each photo-sensitive element (130, 132; 230a-h; 330, 332) in the pair is configured to receive the light from the target and reference light, such that the light from the target is simultaneously detected with the reference light in the photo-sensitive element (130, 132; 230, 232), wherein output from the photo-sensitive elements (130, 132; 230ah; 330, 332) in the pair is connected for providing balanced photodetection.

10. The unit cell according to any one of the preceding claims, wherein the unit cell (100; 200; 300) comprises a plurality of photo-sensitive elements (130, 132; 230a-h; 330, 332), wherein the photo-sensitive elements (130, 132; 230a-h; 330, 332) are configured to detect different characteristics of light from the target.

11. The unit cell according to claim 9 or 10, wherein different photo-sensitive elements (130, 132; 230a-h; 330, 332) are arranged on opposite sides of the light emitting unit (110; 210; 310).

12. The unit cell according to any one of the preceding claims, wherein the light emitting unit (110; 210; 310) is configured to emit a frequency modulated continuous wave, FMCW, signal and wherein the at least one photo-sensitive element (130, 132; 230, 232) is configured to simultaneously detect the light from the target and the reference light to form a combined signal, wherein a beat frequency based on a frequency difference of the light from the target and the reference light represents a distance to the target.

13. A system (400) for detection of light from a target, said system (400) comprising:
an array of unit cells (100; 200; 300) according to any one of the preceding claims,
wherein the light emitting unit and the at least one photo-sensitive element of a first unit cell of the array are arranged in a separate coherent area of the array from the light emitting unit and the at least one photo-sensitive element of neighboring unit cells of the array.

14. The system according to claim 13, wherein a pitch of the unit cells (100; 200; 300) in the array is smaller than 500 µm, such as smaller than 100 µm.

15. A method for detection of light from a target, said method comprising:
emitting (502) coherent light that is output into free space towards the target;
extracting (504), by an extractor, part of the emitted coherent light to form reference light;
propagating (506) reference light along an optical path between the extractor and at least one photo-sensitive element, wherein the reference light propagates through the optical path according to a free space propagation model and wherein the extractor is at least during a measurement, fixed in relation to the at least one photo-sensitive element; and
receiving (508), by the at least one photo-sensitive element, light from the target based on emitted coherent light, and reference light, such that the light from the target is simultaneously detected with the reference light in the photo-sensitive element.
